# EUROPÄISCHE PATENTSCHRIFT

(11) **EP 2 146 307 B1**
(45) Veröffentlichungstag und Bekanntmachung des Hinweises auf die Patenterteilung: **23.05.2012**
(21) Anmeldenummer: 09005499.0
(22) Anmeldetag: 20.04.2009
(51) Int. Cl.: A01D 41/12, A01D 43/06, A01D 91/00, A01B 79/00, G06Q 10/00, G06Q 50/00

(54) **Verfahren zum Koordinieren von fahrbaren landwirtschaftlichen Maschinen**
Method for coordinating driveable agricultural machines
Procédé de coordination de machines agricoles mobiles

(30) Priorität: 23.04.2008 DE 102008020494
(43) Veröffentlichungstag der Anmeldung: 20.01.2010
(73) Patentinhaber: CLAAS Selbstfahrende Erntemaschinen GmbH, 33426 Harsewinkel (DE)
(72) Erfinder: Tölle, Rainer, Dr. agr., 10115 Berlin (DE); Boppenmaier, Marcel, 10178 Berlin (DE); Bönig, Ingo, Dr., 33330 Gütersloh (DE)
(74) Vertreter: Heuer, Wilhelm

(56) Entgegenhaltungen:
- EP-A- 0 821 296
- EP-A- 1 795 986
- WO-A-00/35265
- US-B1- 6 687 616

## Beschreibung

Die vorliegende Erfindung betrifft ein Verfahren zum Koordinieren mehrerer fahrbarer landwirtschaftlicher Maschinen, die zur Erfüllung einer Aufgabe eine Ressource gemeinsam nutzen müssen oder zeitweilig zusammenarbeiten müssen. Ein Verfahren dieser Art ist beispielsweise aus EP 1 795 986 A2 bekannt. Ein Transportfahrzeug stellt hier eine Ressource dar, die von zwei Erntemaschinen gemeinsam genutzt wird, indem letztere Erntegut an das Transportfahrzeug überladen. Zum Überladen muss das Transportfahrzeug zeitweilig mit einer der Erntemaschinen zusammentreffen.

Solange die Zahl der an einem Ernteeinsatz beteiligten Erntemaschinen klein ist, und die Wege, die ein Transportfahrzeug bis zu einem Zusammentreffen mit einer Erntemaschine zurücklegen muss, kurz sind, ist der Koordinationsaufwand gering, und es genügt, wann während des Erntebetriebs eine gewisse Zeit im Voraus abgeschätzt werden kann, wann bei einer Erntemaschine der Tank, der das Erntegut aufnimmt, voll sein wird, damit das Transportfahrzeug rechtzeitig zu einem Ort dirigiert werden kann, an dem sich die Erntemaschine voraussichtlich befinden wird, wenn der Tank voll ist. Wenn ein Transportfahrzeug jederzeit verfügbar sein muss, um sich in Bewegung zu setzen, wenn eine Erntemaschine eines benötigt, dann haben die Transportfahrzeuge zwischen ihren Einsätzen lange Stillstandszeiten, was unwirtschaftlich ist. Verringert man die Zahl der bereitgestellten Transportfahrzeuge, dann vermindern sich zwar deren Stillstandszeiten, im Gegenzug muss dann aber gelegentlich der Stillstand einer Erntemaschine in Kauf genommen werden, weil kein Transportfahrzeug rechtzeitig zum Entladen zur Verfügung steht.

Je länger die vom Transportfahrzeug zurückzulegende Strecke ist, umso früher muss die Anforderung der Erntemaschine kommen, um ein rechtzeitiges Zusammentreffen zu gewährleisten. Je größer jedoch die Zeitspanne zwischen der Anforderung und dem tatsächlichen Zusammentreffen ist, umso unsicherer ist die Prognose, und umso größer ist die Wahrscheinlichkeit, dass Probleme auftreten, weil der Tank der Erntemaschine bereits vor Erreichen des Treffpunktes voll ist, oder weil die Erntemaschine oder das Transportfahrzeug den vorgesehenen Treffpunkt nicht rechtzeitig erreicht.

Ziel der vorliegenden Erfindung ist, ein Verfahren zum Koordinieren von landwirtschaftlichen Maschinen anzugeben, das die oben beschriebenen Nachteile vermeidet und es erlaubt, sämtliche Maschinen mit einem Höchstmaß an Auslastung zu betreiben.

Die Aufgabe wird gelöst durch ein Verfahren zum Koordinieren mehrerer fahrbarer landwirtschaftlicher Maschinen wie in Anspruch 1 angegeben.

Wenn die erste Maschine mit ihrem Arbeitsablauf im Hintertreffen ist, kann zum Beispiel zunächst eine auf die erste Maschine beschränkte erneute Simulation stattfinden, um zu überprüfen, ob durch eine Änderung des Arbeitsablaufs ein geplantes Zusammentreffen mit der zweiten Maschine noch möglich ist. Ist dies nicht der Fall, dann muss auch der Arbeitsablauf der zweiten Maschine neu simuliert werden, wobei im letzteren Fall typischerweise auch der Ort und/oder die Zeit des Zusammentreffens von erster und zweiter Maschine neu festgelegt werden.

Wenn sich ein ursprünglich geplantes Zusammentreffen der ersten und der zweiten Maschine als nicht mehr oder nur noch mit unverhältnismäßigem Aufwand realisierbar erweist, dann wird im Rahmen der neuen Simulation auch geprüft, ob eine dritte Maschine des zweiten Typs existiert, für die ein Zusammentreffen mit der ersten Maschine leichter ist als für die zweite Maschine, und wenn diese dritte Maschine existiert, wird ein Arbeitsablauf für diese dritte Maschine neu simuliert und ihr signalisiert, der ein Zusammentreffen mit der ersten Maschine enthält. Wenn zum Beispiel die erste Maschine eine Erntemaschine ist und aufgrund eines unerwartet schnellen Erntefortschritts ein Überladen des Ernteguts auf ein Transportfahrzeug (als zweite Maschine) früher erforderlich wird, als in einer ursprünglichen Simulation vorgesehen, dann kann geprüft werden, ob ein weiteres Transportfahrzeug in der Nähe ist, welches früher als das in der ursprünglichen Simulation vorgesehene in der Lage ist, die Erntemaschine zu entladen. Wenn dies der Fall ist, wird zweckmäßigerweise auch für die zweite Maschine ein neuer Arbeitsverlauf simuliert, wobei dieser das Zusammentreffen mit der ersten Maschine nicht mehr zu enthalten braucht.

Bei einer Neusimulation kann es auch zweckmäßig sein, zu prüfen, ob eine vierte Maschine des ersten Typs existiert, für die ein Zusammentreffen mit der zweiten Maschine leichter realisierbar ist als für die erste Maschine, wobei, wenn diese vierte Maschine existiert, ein Arbeitsablauf für diese vierte Maschine neu simuliert und ihr signalisiert wird, der ein Zusammentreffen mit der zweiten Maschine enthält. Um im obigen Beispiel zu bleiben, kann eine Abweichung zwischen dem tatsächlichen und dem simulierten Arbeitszustand auch beim Transportfahrzeug auftreten, zum Beispiel wegen eines Unfalls oder eines Staus, so dass dieses die Rolle des ersten Fahrzeugs im Sinne des oben definierten Verfahrens übernimmt. Auch in diesem Fall prüft das Verfahren, ob eine vierte Maschine vom gleichen Typ wie die erste, also ein weiteres Transportfahrzeug, existiert, das rechtzeitig zu der Erntemaschine dirigiert werden kann, um diese zu entladen.

Wenn sich zum Zeitpunkt einer Simulation die Erntemaschine auf einer abzuerntenden Fläche befindet und die Simulation ergibt, dass ein Zusammentreffen mit der Transportmaschine an der abzuerntenden Fläche nicht möglich ist, bevor auf der Fläche geerntetes Erntegut das Fassungsvermögen eines Tanks der Erntemaschine übersteigt, dann kann als Ergebnis der Simulation auch ein Zusammentreffen abseits der abzuerntenden Fläche vorgesehen werden, das heißt die Erntemaschine kann die abzuerntende Fläche verlassen und dem Transportfahrzeug entgegen kommen, um mit dem Umladen des Ernteguts zum frühestmöglichen Zeitpunkt zu beginnen.

Es kann auch der Sonderfall auftreten, dass, wenn sich zur Zeit einer Simulation die Erntemaschine auf einer abzuerntenden Fläche befindet, ein Zusammentreffen mit der Transportmaschine an der abzuerntenden Fläche nicht möglich ist, bevor auf der Fläche geerntetes Erntegut das Fassungsvermögen des Tanks übersteigt und die Fläche komplett abgeerntet ist. In diesem Fall kann es unwirtschaftlich sein, dass die Erntemaschine das Eintreffen des Transportfahrzeuges untätig abwartet oder dass die Erntemaschine zunächst dem Transportfahrzeug entgegen kommt, um anschließend zu einem noch nicht abgeernteten Rest der Fläche zurückzukehren. In diesem Fall kann die Simulation das Verwerfen eines Restes des zur Zeit der Simulation noch auf der Fläche befindlichen Ernteguts vorsehen, zum Beispiel in der Weise, dass zwar die Restfläche abgeerntet, aber ein zeitweiliges Überlaufen des Tanks und damit das Verlorengehen von Erntegut in Kauf genommen wird.

Die Simulation des Arbeitsablaufs für eine der Maschinen umfasst vorzugsweise nicht nur die Festlegung eines Treffpunkts mit einer anderen Maschine, sondern auch die Festlegung eines von der Maschine, wenigstens bis zu diesem Zusammentreffen, zurückzulegenden Weges.

Falls die Maschine, für die die Simulation durchgeführt wird, eine Transportmaschine ist, so wird zur Festlegung des Weges, soweit er über eine landwirtschaftliche Fläche verläuft, vorzugsweise eine Karte dieser Fläche herangezogen, die nicht zu befahrende Teile der Fläche spezifiziert.

Als nicht zu befahrende Teile können in der Karte insbesondere sandige oder feuchte Flächenteile oder allgemein solche Flächenteile verzeichnet sein, auf denen ein erhöhtes Risiko des Steckenbleibens der Transportmaschine besteht.

Zweckmäßig ist auch, die Überfahrung der landwirtschaftlichen Fläche durch die Maschinen zu überwachen und stark überfahrene Teile der Fläche in der Karte als nicht zu befahrende Flächenteile zu vermerken. Während eine gleichmäßige Verteilung der Flächenbelastung durch die Erntemaschinen in der Regel bereits dadurch gewährleistet ist, dass die Überfahrung bereits abgeernteter Teilflächen aus Wirtschaftlichkeitsgründen vermieden wird, kann auf diese Weise auch eine gleichmäßige Verteilung der von den Transportmaschinen verursachten Belastung erreicht werden.

Der als Teil eines Arbeitsablaufs für eine Maschine festgelegte Weg wird zweckmäßigerweise dem Fahrer an Bord der Maschine angezeigt. Dies kann in Kartenform geschehen, insbesondere, wenn der Weg über Straßen verläuft, was vor allem bei einer Transportmaschine meist für wenigstens einen Teil des zwischen einem Treffpunkt mit einer Erntemaschine und einer Infrastruktureinrichtung zurück zu legenden Weg zutrifft.

Alternativ besteht die Möglichkeit, den festgelegten Weg an Bord der Maschine in Form von aufeinanderfolgenden Lenkanweisungen an den Fahrer anzuzeigen. Dies ist vor allem sinnvoll, wenn der Weg über eine landwirtschaftliche Fläche verläuft, auf der der Fahrer keiner markierten Fahrbahn folgen kann und daher Schwierigkeiten hat, von sich aus zu erkennen, ob er vom festgelegten Weg abweicht oder nicht.

Die Simulationen der Arbeitsabläufe aller Maschinen erfolgen vorzugsweise auf Grundlage eines Verzeichnisses der jeweils einsatzbereiten Maschinen. So ist es möglich, wenn sich ein Zusammentreffen zwischen zwei Maschinen, das für eine der Maschinen erforderlich ist, damit diese ihre Arbeit fortsetzen kann, als nicht durchführbar erweist, eine andere für ein Zusammentreffen geeignete Maschine aus der Liste auszuwählen. Zweckmäßigerweise meldet jede Maschine jede Änderung ihrer Einsatzbereitschaft an das Verzeichnis, so dass, beispielsweise im Falle einer Panne der Maschine, wenigstens ein Teil der Arbeitsabläufe der anderen Maschinen unter Berücksichtigung der Änderung neu simuliert werden kann. Eine solche neue Simulation ist auf jeden Fall notwendig bei einer Maschine, für die ein Zusammentreffen mit der ausgefallenen Maschine vorgesehen war. Für Maschinen vom gleichen Typ wie die ausgefallene Maschine ist eine erneute Simulation wünschenswert, da diese nun so weit wie möglich die Aufgaben der ausgefallenen Maschine mit übernehmen müssen. Auch im Falle von Maschinen, die eine Ressource gemeinsam mit der ausgefallenen Maschine nutzen, kann eine erneute Simulation wünschenswert sein, da der Ausfall den verbleibenden Maschinen die Möglichkeit eines früheren Zugriffs als ursprünglich vorgesehen auf die gemeinsame Ressource eröffnen kann.

Zweckmäßig ist auch, wenn eine Maschine zusammen mit einer Änderung ihrer Einsatzbereitschaft einen voraussichtlichen Zeitpunkt der Rückänderung ihrer Einsatzbereitschaft an das Verzeichnis meldet. Auf diese Weise ist das Verfahren auch in der Lage, vorübergehende Unterbrechungen der Einsatzbereitschaft zu berücksichtigen, die zum Beispiel durch die Bedürfnisse der Maschinenfahrer bedingt sind. Die durch die Änderungsmeldung veranlasste erneute Simulation erfolgt dann zweckmäßigerweise unter der Annahme, dass die Einsatzbereitschaft der Maschine sich zu dem voraussichtlichen Zeitpunkt wieder ändert.

Gegenstand der Erfindung ist auch eine Steuervorrichtung mit einer Verarbeitungseinheit und einer Schnittstelle für die Kommunikation mit einer Mehrzahl von fahrbaren landwirtschaftlichen Maschinen, die eingerichtet ist, ein Verfahren wie oben beschrieben auszuführen. Diese Steuervorrichtung kann zentral, getrennt von den landwirtschaftlichen Maschinen oder auch an Bord einer der Maschinen implementiert sein; in letztem Falle kann die Vorrichtung selbst mit einer Benutzerschnittstelle zum Anzeigen des für die betreffende Maschine festgelegten Weges versehen sein.

Ein weiterer Gegenstand der Erfindung ist ein Computerprogrammprodukt mit Programmcodemitteln, welche eine programmierbare Datenverarbeitungseinrichtung befähigen, das oben beschriebene Verfahren auszuführen. Das Computerprogrammprodukt kann insbesondere in Gestalt eines Datenträgers vorliegen, auf dem in von der Datenverarbeitungseinrichtung lesbarer Form Programmanweisungen aufgezeichnet sind, die die Datenverarbeitungseinrichtung zur Ausführung des Verfahrens befähigen.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: ein Blockdiagramm eines Systems von fahr- baren landwirtschaftlichen Maschinen, in dem die vorliegende Erfindung verwirk- licht ist;
- Fig. 2: ein Blockdiagramm der zentralen Verarbei- tungseinheit des Systems von Fig. 1 und einer auf einer der fahrbaren Maschinen mitgeführten dezentralen Verarbeitungs- einheit;
- Fig. 3: in Form einer Landkarte den Inhalt der geografischen Datenbank der zentralen Verarbeitungseinheit zu Beginn des Ver- fahrens;
- Fig. 4: geplante Routen für zwei Erntemaschinen am Beginn eines Ernteeinsatzes;
- Fig. 5: den im Laufe des Ernteeinsatzes ergänzten Inhalt der Datenbank;
- Fig. 6: eine simulierte Route der ersten Erntema- schine auf einer abzuerntenden Fläche;
- Fig. 7: einen während des Beerntens der Fläche stattfindenden Überladevorgang;
- Fig. 8: den infolge des überladevorgangs aktuali- sierten Inhalt der geografischen Daten- bank sowie simulierte Wege der Erntema- schine und eines Transportfahrzeugs; und
- Fig. 9: simulierte Wege der Erntemaschinen zu ei- nem späteren Zeitpunkt.

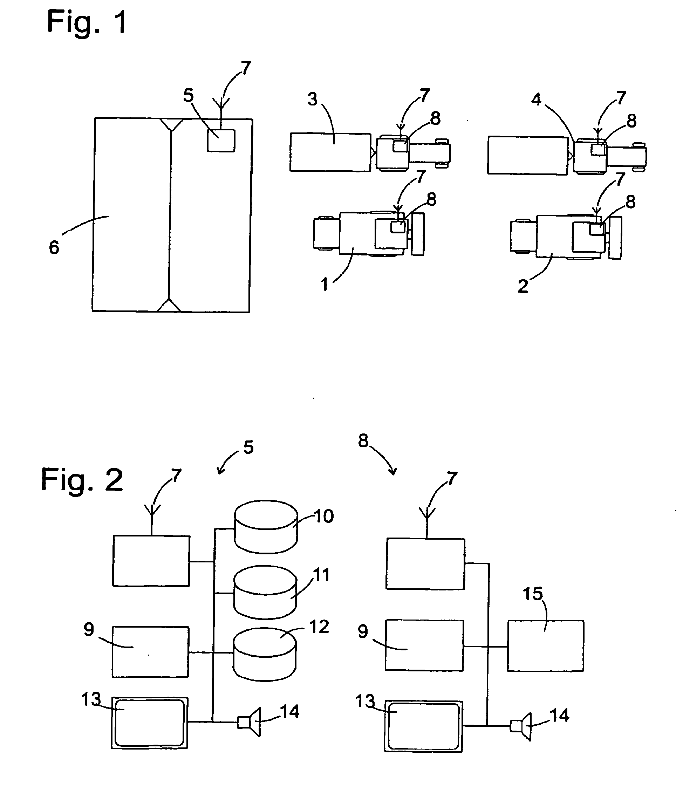

Ein gemäß der vorliegenden Erfindung zu koordinierendes System von landwirtschaftlichen Maschinen umfasst zum Beispiel, wie in Fig. 1 gezeigt, als Erntemaschinen eine Mehrzahl von Mähdreschern 1, 2 und als Transportfahrzeuge Schlepper mit Anhängern 3, 4. Eine Vorrichtung zum Koordinieren der Fahrzeuge 1 bis 4 umfasst eine zentrale Verarbeitungseinheit 5 in Form eines geeignet programmierten Computersystems, das im hier betrachteten Fall stationär in einem Gebäude 6 lokalisiert ist. Abwandlungen, bei denen die zentrale Verarbeitungseinheit 5 in eine der zu koordinierenden Maschinen eingebaut ist, oder delokalisiert auf mehreren dieser Maschinen implementiert ist, kommen ebenfalls in Betracht.

Die zentrale Verarbeitungseinheit 5 und dezentrale Verarbeitungseinheiten 8 der Maschinen 1 bis 4 kommunizieren miteinander per Funk. Fig. 2 zeigt detaillierter den Aufbau der zentralen und dezentralen Verarbeitungseinheiten 5, 8. Die zentrale Verarbeitungseinheit 5 umfasst eine CPU 9, eine Funkschnittstelle 7, eine Maschinendatenbank 10, in der die zum System gehörenden Maschinen 1 bis 4, Angaben zu ihrer Einsatzfähigkeit sowie ihre für die Einsatzplanung relevanten technischen Daten gespeichert sind, eine geografische Datenbank 11, die geografische Daten über das Gebiet eines geplanten Einsatzes der Maschinen 1 bis 4 enthält, eine Simulationsdatenbank 12 zur Speicherung von simulierten Abläufen eines Einsatzes der Maschinen 1-4, sowie eine Benutzerschnittstelle mit einem Anzeigeschirm 13 und einem (nicht dargestellten) Eingabewerkzeug die über einen Bus verbunden sind. Falls die zentrale Verarbeitungseinheit 5 in einer der fahrbaren Maschinen eingebaut ist, kann darüber hinaus die Benutzerschnittstelle noch mit einem Lautsprecher 14 ausgestattet sein, auf dessen Funktion an späterer Stelle noch genauer eingegangen wird.

Die dezentralen Verarbeitungseinheiten 8 der Maschinen 1 bis 4 umfassen jeweils ebenfalls eine Funkschnittstelle 7, eine CPU 9, die Benutzerschnittstelle sowie einen GPS-Decoder 15 zur Positionsermittlung der Maschine.

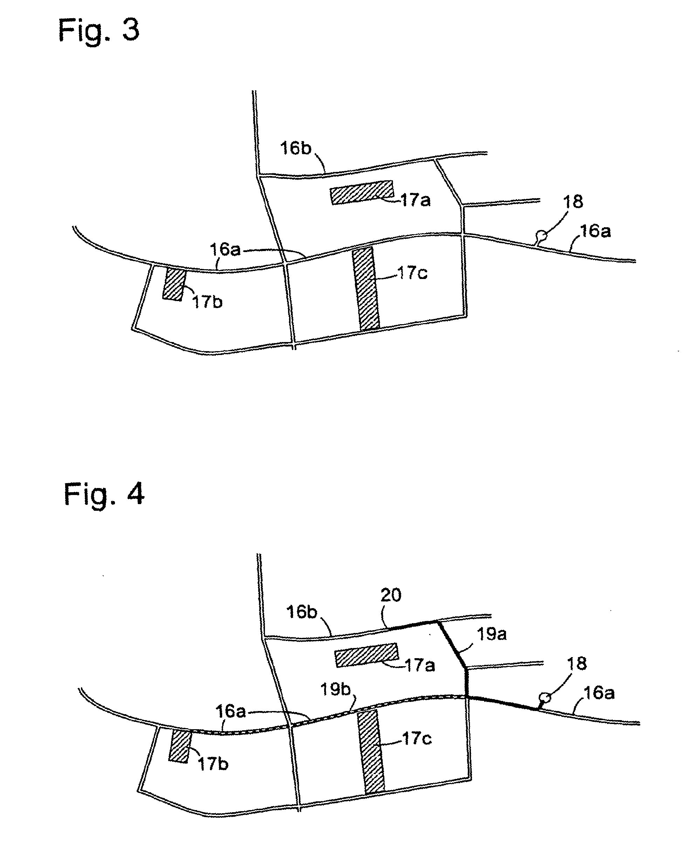

Um einen Ernteeinsatz zu planen, bekommt die zentrale Verarbeitungseinheit 5 von einem Benutzer zu einem gegebenen Termin zu beerntende Ackerflächen vorgegeben. Dies kann zum Beispiel geschehen, indem die zentrale Verarbeitungseinheit 5 auf ihrem Anzeigeschirm 13 eine anhand der Daten der geografischen Datenbank 11 generierte Kartendarstellung des beabsichtigten Einsatzgebietes anzeigt und ein Benutzer, zum Beispiel mit Hilfe einer Maus, zu beerntende Ackerflächen markiert. Eine solche Bildschirmanzeige ist exemplarisch in Fig. 3 dargestellt. Von den Maschinen befahrbare Straßen sind in der Karte mit 16a, 16b, ..., und zu beerntende Ackerflächen mit 17a, 17b, 17c bezeichnet. Das Bezugszeichen 18 bezeichnet eine Infrastruktureinrichtung wie etwa eine Trocknungsstation, eine Lagerhalle oder eine Mühle, an der die Schlepper 3, 4 das Erntegut zusammentragen sollen.

Im einfachsten Fall enthält die geografische Datenbank 11 zu den Ackerflächen 17a, 17b, 17c jeweils nur Information über ihre Lage und Größe, so dass für eine Simulation des Ernteeinsatzes, insbesondere zur Abschätzung der zum Abernten einer Fläche benötigten Zeit, auf pauschale Schätzwerte der pro Flächeneinheit einzubringenden Menge an Erntegut zurückgegriffen werden muss. Vorzugsweise, insbesondere wenn das erfindungsgemäße System zum wiederholten Male zum Beernten der gleichen Flächen eingesetzt wird, enthält die geografische Datenbank 11 auch Angaben über die in früheren Einsätzen auf den Flächen 17 geernteten Mengen, anhand derer eine präzisere Prognose der Erntegutmenge möglich ist.

In der vorliegenden Beschreibung soll der Einfachheit halber davon ausgegangen werden, dass das System erstmalig zum Beernten der Flächen 17 eingesetzt wird. Wie aus Fig. 3 deutlich wird, ist zu diesem Zeitpunkt auch das Kartenmaterial in der Datenbank 11 hinsichtlich der befahrbaren Wege noch unvollständig. Während die Flächen 17b, 17c unmittelbar an die Straße 16a angrenzen und daher voraussichtlich auch über diese Straße erreichbar sind, enthält die Datenbank 11 keine Straße, die bis unmittelbar an die Ackerfläche 17a heran führt. Dies macht deutlich, dass jede Simulation des Ernteablaufs, die die zentrale Verarbeitungseinheit 5 anhand der Daten der geografischen Datenbank 11 ausführen kann, mit einer Unsicherheit behaftet ist, da nicht exakt angegeben werden kann, wie lang der Weg zwischen der Ackerfläche 17a und der Infrastruktureinrichtung 18 ist und wie lange ein Schlepper für diesen Weg benötigen wird.

Nachdem die abzuerntenden Ackerflächen 17 spezifiziert worden sind, beginnt die zentrale Verarbeitungseinheit 5, einen Ernteablauf einschließlich der Bewegungen aller beteiligter Maschinen 1 bis 4 zu simulieren. Hierzu wählt sie für jeden Mähdrescher 1, 2 eine zuerst zu beerntende Fläche unter den Ackerflächen 17a bis 17c aus, berechnet die Zeit, die die Mähdrescher 1, 2 von einem Ausgangsort, zum Beispiel der Infrastruktureinrichtung 18, aus benötigen, um die ausgewählte Ackerfläche zu erreichen, und die Zeit, die sie voraussichtlich benötigen werden, um auf der Ackerfläche ihren Korntank zu füllen. Die hierfür erforderlichen Daten wie etwa die typischen Geschwindigkeiten der Mähdrescher 1, 2 auf einer Straße und auf einem Acker, der erwartete Flächenertrag für die Flächen 17a, 17b, 17c sowie die Ladekapazität des Korntanks sind in der Maschinendatenbank 10 verzeichnet. Da das Verfahren zum ersten Mal auf die Flächen 17a, 17b, 17c angewandt wird, enthält die geographische Datenbank zunächst nur vom Hersteller vorgegebene pauschale Schätzwerte zur Flächendichte des Erntematerials.

In einem nächsten Schritt bestimmt die zentrale Verarbeitungseinheit 5 eine Route und Fahrzeiten für die Schlepper 3, 4, die jeweils zum Zeitpunkt, an dem die Tanks der Mähdrescher 1, 2 voraussichtlich voll sein werden, bei diesen auf dem Feld sein sollen, um den Tankinhalt zu übernehmen und zur Infrastruktureinrichtung 18 zu schaffen.

Wenn bei einem ersten Simulationsversuch zum Beispiel beide Mähdrescher 1, 2 auf der gleichen Ackerfläche zum Einsatz kommen, für die Fahrt dorthin gleich lang benötigen und die gleiche Zeit zum Füllen ihrer Tanks benötigen, dann treffen auch die Schlepper 3, 4 voraussichtlich ungefähr gleichzeitig an der Infrastruktureinrichtung 18 ein, so dass dort beim Entladen ein Schlepper auf den anderen warten muss. Eine solche Simulation wird daher voraussichtlich als unwirtschaftlich verworfen. Die Entscheidung, welche aus einer Vielzahl von ausprobierten und in der Simulationsdatenbank 12 zwischengespeicherten Simulationen tatsächlich zum Steuern der Maschinen 1 bis 4 eingesetzt wird, erfolgt anhand einer Wirtschaftlichkeitsbewertung, die den Einsatzdauern der Maschinen sowie den von ihnen auf Straßen beziehungsweise auf Ackerflächen zurückgelegten Wegen etc. spezifische Kosten zuordnet. Die Verarbeitungseinheit 5 wählt aus der Vielzahl von Simulationen diejenige aus, deren Kosten minimal sind.

Vorzugsweise umfassen diese den Ernteeinsatz vorbereitenden Simulationen sämtliche Bewegungen der Maschinen 1 bis 4 vom Aufbruch der Maschinen bis zur vollständigen Aberntung der Ackerflächen 17 und der Rückkehr der Maschinen zu ihrem Standort. Um den eigentlichen Aufwand, insbesondere bei sich über große Flächen erstreckenden Ernteeinsätzen mit einer Vielzahl von Maschinen und Maschinenbewegungen gering zu halten, kann es auch zweckmäßig sein, wenn die Simulationen jeweils nur eine kürzere Zeitspanne erfassen, zum Beispiel für einen Mähdrescher jeweils nur bis zum übernächsten oder überübernächsten Überladevorgang. In diesem Fall würde eine Gütebewertung einer Simulation, die sich rein an den während des Simulationszeitraums anfallenden Betriebskosten orientiert, nicht zu einem befriedigenden Ergebnis führen. Es ist daher eine komplexere Bewertungsfunktion erforderlich, die berücksichtigt, dass die Kosten der Einbringung von Erntegut von einer weit von der Infrastruktureinrichtung 18 entfernten Ackerfläche wie etwa 17b zwangsläufig höher sind als von einer nah benachbarten wie 17c.

Nachdem die zentrale Verarbeitungseinheit 5 die Simulationen abgeschlossen und eine von ihnen ausgewählt hat, überträgt sie Fahranweisungen entsprechend der ausgewählten Simulation an die Maschinen 1-4. Diese Fahranweisungen haben die Form eines Kartenbildes, in dem der von der Empfängermaschine zurückzulegende Weg hervorgehoben ist. Fig. 4 zeigt in Kartenform die Fahranweisungen an die Mähdrescher 1, 2. Der Mähdrescher 1, dessen Weg 19a als durchgezogene Linie dargestellt ist, wird zu einem der Ackerfläche 17a nah benachbarten Punkt 20 auf der am nächsten an der Ackerfläche 17a vorbeiführenden Straße 16b geschickt. Dieser Weg 19a ist unter Anwendung herkömmlicher Routenplanungsalgorithmen hinsichtlich seiner Wirtschaftlichkeit, Länge oder Fahrzeit optimiert. Ein Weg vom Punkt 20 auf die Ackerfläche 17a ist in den Anweisungen nicht enthalten, da in der geografischen Datenbank 11 kein auf die Ackerfläche 17a führender Weg enthalten ist. Der Fahrer des Mähdreschers 1 ist daher gezwungen, von dem Punkt 20 aus einen Weg auf die Ackerfläche 17a selbst zu finden. Tatsächlich existiert ein solcher Weg, und indem der Mähdrescher 1 ihn befährt und dabei, wie auch sonst fortlaufend während seines Betriebs, seine vom GPS-Decoder 15 ermittelte Position an die zentrale Verarbeitungseinheit 5 rückmeldet, erhält diese Kenntnis von der Existenz des Feldweges 21 und fügt diesen zu der geografischen Datenbank 11 hinzu.

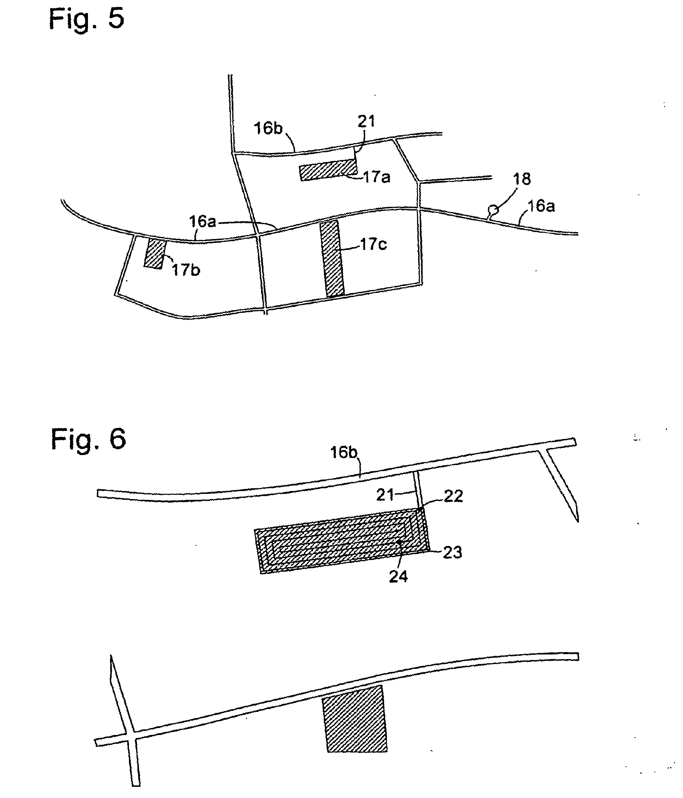

Mit dieser in Fig. 5 dargestellten Aktualisierung der geografischen Datenbank 11 ändern sich die Voraussetzungen, auf denen sich die ursprünglichen Simulationen des Ernteablaufs gründeten. Da die Möglichkeit besteht, dass eine neuerliche Simulation des Ernteablaufs basierend auf der durch den Feldweg 21 aktualisierten geografischen Datenbank 11 zu einem wirtschaftlicheren Ablauf als dem ursprünglich ausgewählten führt, reagiert die zentrale Verarbeitungseinheit 5 auf die Änderung der Datenbank 11, indem sie ausgehend von den gegenwärtigen Positionen der Maschinen 1 bis 4 und Bearbeitungszuständen der Flächen 17a bis 17c erneut mögliche Ernteabläufe simuliert, unter diesen den wirt- ' schaftlichsten auswählt und ggf. geänderte Fahranweisungen an die Maschinen sendet.

Nachdem der Mähdrescher 1 die Ackerfläche 17a erreicht hat und die zentrale Verarbeitungseinheit 5 dies anhand der rückgemeldeten Position des Mähdreschers 1 erkennt, sendet sie ihm Information über den beim Abernten der Fläche 17a abzufahrenden Weg. Fig. 6 zeigt diese Information wiederum in Form einer Karte, die auf dem Anzeigeschirm 13 des Mähdreschers 1 dargestellt werden kann; alternativ oder ergänzend kann vorgesehen werden, dass der Fahrer die Information in Form von Sprachanweisungen erhält, die über den Lautsprecher 14 der lokalen Verarbeitungseinheit 8 ausgegeben werden und ihn auf Abweichungen vom vorgesehenen Weg oder erforderliche Lenkmanöver aufmerksam machen. So erhält der Fahrer beispielsweise am Punkt 22, bei Erreichen der Ackerfläche 17a, die Anweisung, geradeaus weiter entlang der Schmalseite der Fläche 17a zu fahren; bei Erreichen der Ecke 23 erhält er die Anweisung, eine 90 Grad-Rechtskurve zu fahren, usw. Während in dem Fall, dass wie hier betrachtet ein einziger Mähdrescher eine Ackerfläche bearbeitet, derartige Sprachanweisungen verzichtbar sein mögen, sind sie sehr hilfreich, wenn mehrere Mähdrescher zur Bearbeitung einer gleichen Fläche eingeteilt sind und Grenzen zwischen den von den einzelnen Mähdreschern zu bearbeitenden Flächenbereichen noch nicht erkennbar sind bzw. ein Mähdrescher, anstatt am Rand einer abzuerntenden Fläche entlangzufahren, auf einem vorgegebenen Kurs mitten in sie hineinfahren muss.

Ein Punkt auf dem Weg des Mähdreschers 1, an dem der Simulation zufolge sein Tank voll sein wird, ist in Fig. 6 mit 24 bezeichnet. Eine Prognose über die Lage dieses Punktes 24 und den Zeitpunkt, an dem der Mähdrescher 1 ihn erreicht, ist bereits in der Simulation enthalten gewesen, auf deren Grundlage die Fahranweisungen der Fig. 4 für die Mähdrescher 1, 2 erstellt wurden, genauso wie ein Weg, den der Schlepper 3 zu dem Treffpunkt 24 zurücklegen kann, und ein Abfahrzeitpunkt für den Schlepper 3, an dem er aufbrechen muss, um den Treffpunkt 24 rechtzeitig zu erreichen. Anhand von Positionsdaten und Daten über den aktuellen Tankfüllstand, die der Mähdrescher 1 auf seinem Weg von Punkt 22 zum Treffpunkt 24 fortlaufend an die zentrale Verarbeitungseinheit 5 zurück liefert, adaptiert diese fortlaufend ihre Prognose über die Lage des Treffpunkts 24 und den Zeitpunkt, an dem der Mähdrescher 1 ihn erreichen wird. Daraus eventuell resultierende Änderungen des vom Schlepper 3 zu dem Treffpunkt 24 zurückzulegenden Weges und der Zeiten, an denen der Schlepper 3 bestimmte Punkte dieses Weges erreicht haben sollte, werden in Echtzeit an diesen als Fahranweisungen übertragen.

Des Weiteren ermittelt die zentrale Verarbeitungseinheit 5 aus den vom Mähdrescher 1 gelieferten Füllstandsdaten den Flächenertrag der Fläche 17a und speichert diesen, ggf. sogar ortsaufgelöst, in der geographischen Datenbank 11. Diese Aufzeichnungen des Flächenertrages erlauben eine genauere Ertragsprognose, wenn das Verfahren in einem späteren Ernteeinsatz erneut auf die Fläche 17a angewandt wird. Die Zuverlässigkeit der Simulationen wird daher bei wiederholter Anwendung des Verfahrens immer besser.

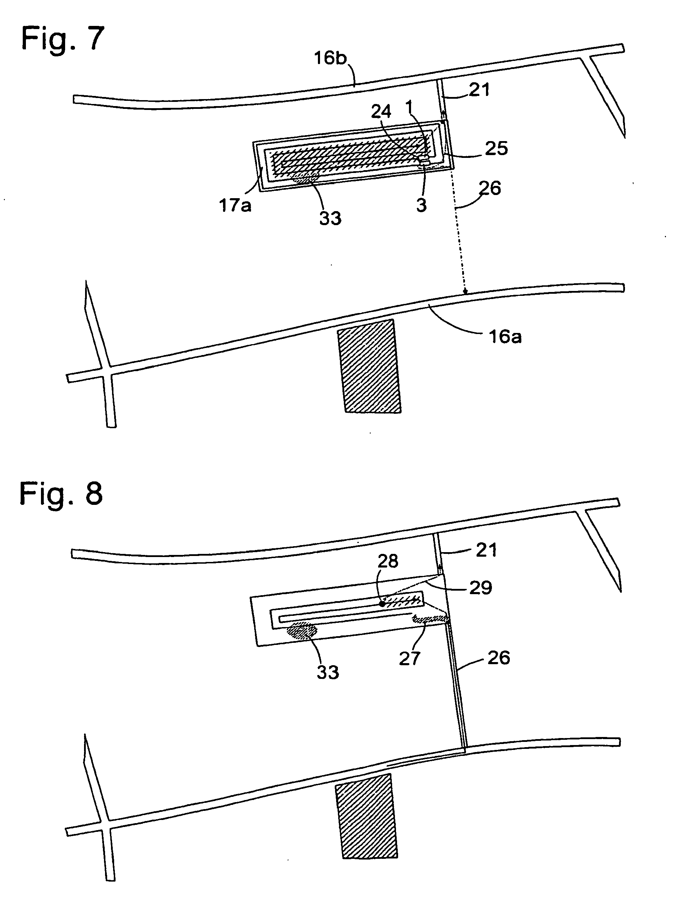

Fig. 7 zeigt das Zusammentreffen des Mähdreschers 1 und des Schleppers 3 am Punkt 24. Fahranweisungen der zentralen Verarbeitungseinheit 5 an den Schlepper 3, wie dieser nach dem Überladen des Ernteguts vom Mähdrescher 1 die Ackerfläche 17a verlassen soll, sind in Fig. 7 als gestrichelte Linie 25 dargestellt. Die zentrale Verarbeitungseinheit 5 weist den Schlepper 3 an, die Ackerfläche 17a über den Feldweg 21 zu verlassen, da in der geografischen Datenbank 11 keine andere Möglichkeit angegeben ist.

Der Fahrer des Schleppers 3, der auf seinem Anzeigeschirm 13 die Karte der Fig. 7 als Fahranweisung angezeigt bekommt, kann aus der Tatsache, dass der Feldweg 21 als einziger von der Ackerfläche 17a führender Weg angezeigt ist, entnehmen, dass die Datenbank 11 keinen anderen Weg kennt. Der Schlepperfahrer kann aber vor Ort erkennen, dass ein weiterer Feldweg 26 existiert, der die Ackerfläche 17a direkt mit der Straße 16a verbindet. Da der Feldweg 26 offensichtlich eine kürzere Verbindung zur Infrastruktureinrichtung 18 ist als der Weg 19a, auf dem er die Ackerfläche 17a erreicht hat, benutzt der Schlepperfahrer den Feldweg 26. Anhand der Positionsrückmeldungen des Schleppers 3 erkennt die zentrale Verarbeitungseinheit 5, dass der Feldweg 26 existiert und ergänzt ihn in der geografischen Datenbank 11. Ferner kennzeichnet sie den von dem beladenen Schlepper 3 auf der Ackerfläche 17a zurückgelegten Weg in der Datenbank 11 als befahren, wie in Fig. 8 durch eine schraffierte Fläche 27 symbolisiert.

An einem Vergleich der Fig. 7 und 8 erkennt man, dass in dem Maße, wie der Mähdrescher sich auf der Fläche 17a vorarbeitet, ein durch Schraffur hervorgehobener Bereich 33 größer wird. Es handelt sich hier um eine Teilfläche, wo wegen sandigen oder feuchten Untergrunds das Verhältnis von Antriebsleistung des Mähdreschers 1 zu seiner Geschwindigkeit ungünstiger ist als anderenorts. Indem die Antriebsleistung des Mähdreschers zusammen mit dessen Positionsdaten fortlaufend an die zentrale Verarbeitungseinheit 5 übertragen wird, ist diese in der Lage, die schlecht befahrbare Teilfläche 33 zu erkennen und in die geografische Datenbank 11 aufzunehmen.

Basierend auf der in dieser Weise aktualisierten Datenbank 11 führt die zentrale Verarbeitungseinheit 5 einen neuerlichen Simulationslauf aus.

Ein Punkt, an dem der Korntank des Mähdreschers 1 zum zweiten Mal voll ist, ist in Fig. 8 mit 28 bezeichnet. Im jüngsten Simulationslauf, nach der Aktualisierung der geografischen Datenbank 11 um den Feldweg 26, die befahrene Fläche 27 und die schlecht befahrbare Fläche 33, ist für den Schlepper 3 festgelegt worden, dass dieser auf dem Weg 19a (siehe Fig. 4) von der Infrastruktureinrichtung 18 zum Überladepunkt 28 und zurück fahren soll, wobei der Weg des Schleppers 3 vom Überladepunkt 28 zurück zum Feldweg 21 auf der Ackerfläche 17a als gestrichelte Linie 29 eingezeichnet ist. Obwohl der Weg vom Überladepunkt 28 zur Infrastruktureinrichtung 18 entlang des Feldweges 26 und der Straße 16a geringfügig kürzer wäre, sieht die zentrale Verarbeitungseinheit 5 für den Schlepper 3 den Weg 29 vor, da dieser die bereits befahrene Fläche 27 meidet und so einer unnötigen Verdichtung der Ackerfläche 17a vorbeugt.

Der Fahrer des Schleppers 3 kann aus der Tatsache, dass das nun auf seinem Bildschirm 14 angezeigte Kartenbild den Feldweg 26 zeigt, erkennen, dass die zentrale Verarbeitungseinheit 5 die Existenz dieses Weges bei der Simulation berücksichtigt, aber gegen seine Benutzung entschieden hat. Daher folgt der Fahrer diesmal der Anweisung der zentralen Verarbeitungseinheit 5.

Wie Fig. 8 zeigt, ist, wenn der Mähdrescher 1 den Überladepunkt 28 erreicht, nur noch ein geringer Rest der Fläche 17a unbeerntet. Wenn sich der Schlepper 3 aufgrund eines unvorhergesehenen Zwischenfalls auf den Weg zum Überladepunkt 28 verspätet, so erkennt die zentrale Verarbeitungseinheit 5 dies spätestens anhand der Positionsrückmeldungen, die sie laufend von allen Maschinen 1 bis 4 empfängt, vorzugsweise aber bereits anhand einer Störungsmeldung, die der Fahrer des Schleppers 3 aufgrund des Zwischenfalls per Funk an die zentrale Verarbeitungseinheit 5 sendet. Sobald eine solche Störungsmeldung eingeht oder der Arbeitszustand des Schleppers 3 sich signifikant von dem in der Simulation vorgesehenen unterscheidet, d.h. wenn der Abstand zwischen dem Ort, an dem sich der Schlepper 3 befindet und dem, an dem er sich gemäß Simulation befinden sollte, einen Grenzwert übersteigt, oder wenn die Zeitdifferenz zwischen der Gegenwart und der Zeit, an der er sich gemäß der Simulation an seinem gegenwärtigen Aufenthaltsort befinden sollte, einen Grenzwert übersteigt, löst die zentrale Verarbeitungseinheit 5 wiederum einen Simulationslauf aus, um festzustellen, wie der Ausfall des Schleppers 3 mit möglichst wenig Einbuße an Wirtschaftlichkeit kompensiert werden kann. Nach Möglichkeit wird eine solche Kompensation darin beruhen, dass ein anderer Schlepper abgestellt wird, um den Mähdrescher 1 am Punkt 28 zu entladen. Die Wahrscheinlichkeit, dass dies möglich ist, ohne zu Engpässen bei der Entladung weiterer Mähdrescher zu führen, ist umso größer, je größer die Zahl der am System beteiligten Schlepper ist und je früher vor Erreichen des Punktes 28 der Ausfall des Schleppers 3 eintritt. Bei einem sehr kurzfristigen Ausfall ist die Wahrscheinlichkeit hoch, dass kein Ersatzschlepper rechtzeitig herangeführt werden kann, um den Mähdrescher 1 ohne Wartezeit zu entladen.

Um auch einer solchen Situation Rechnung tragen zu können, ist die Regel, nach der die zentrale Verarbeitungseinheit 5 die wirtschaftliche Brauchbarkeit verschiedener alternativer Simulationen beurteilt, ausgelegt, um auch den erwarteten Verkaufserlös des Ernteguts zu berücksichtigen und Simulationen in Betracht zu ziehen, die eine unvollständige Einbringung des Ernteguts vorsehen, wenn dadurch eine signifikante Verringerung der Betriebskosten erreichbar ist, die einen verringerten Verkaufserlös ausgleicht. Dies kann beispielsweise bedeuten, dass die zentrale Verarbeitungseinheit 5 in dem nach Ausfall des Schleppers 3 durchgeführten Simulationslauf eine Simulation als optimal auswählt, bei der der Mähdrescher 1, anstatt am Punkt 28 auf einen Schlepper zu warten, den Überladepunkt 28 ohne Halt überfährt, die Fläche 17a komplett aberntet, wobei Verluste an Erntegut, das nicht mehr in den Tank passt, in Kauf genommen werden, und sich anschließend sofort auf den Weg zur nächsten zu beerntenden Fläche 17c macht. Indem das Überladen erst auf der Fläche 17c stattfindet, wird die Zeit, die zum Heranführen eines Schleppers zur Verfügung steht, um die Zeit verlängert, die der Mähdrescher 1 auf dem Weg zwischen den Flächen 17a, 17c zubringt, so dass es in diesem Fall relativ einfach ist, eine Simulation zu finden, bei der der Mähdrescher 1 ohne Warten entladen werden kann.

Wenn die Qualität der Daten in der geografischen Datenbank 11 dies zulässt, kann ein Treffpunkt zwischen Schlepper und Mähdrescher 1 gegebenenfalls auch auf der Straße 16a zwischen den Flächen 17a, 17c festgelegt werden, sofern dort, zum Beispiel auf einem Parkplatz, genügend Platz vorhanden ist, wo Mähdrescher und Schlepper nebeneinander stehen können, ohne den Verkehr zu behindern.

Wenn der Fahrer des Schleppers 3 oder irgendeiner anderen der Maschinen über seine Benutzerschnittstelle einen Zwischenfall an die zentrale Verarbeitungseinheit meldet, dann kann er gleichzeitig, falls absehbar, auch eine Angabe über die voraussichtliche Dauer des Zwischenfalls senden. Es liegt auf der Hand, dass Änderungen im Arbeitsablauf der Maschinen, den die zentrale Verarbeitungseinheit 5 aufgrund der Zwischenfallmeldung simuliert, weniger gravierend sein werden, wenn der Ausfall der meldenden Maschine nur befristet ist, als wenn mit einem Totalausfall gerechnet werden muss. Insbesondere ergibt sich durch Absenden einer zeitlich begrenzten Zwischenfallmeldung für einen Fahrer die Möglichkeit, seine Arbeit für dringende Bedürfnisse kurz zu unterbrechen, ohne dass die zentrale Verarbeitungseinheit 5 einen Ausfall der Maschine annimmt und einen neuen Simulationslauf auslöst, der sich als überflüssig erweist, sobald der Fahrer seine Maschine wieder in Bewegung setzt.

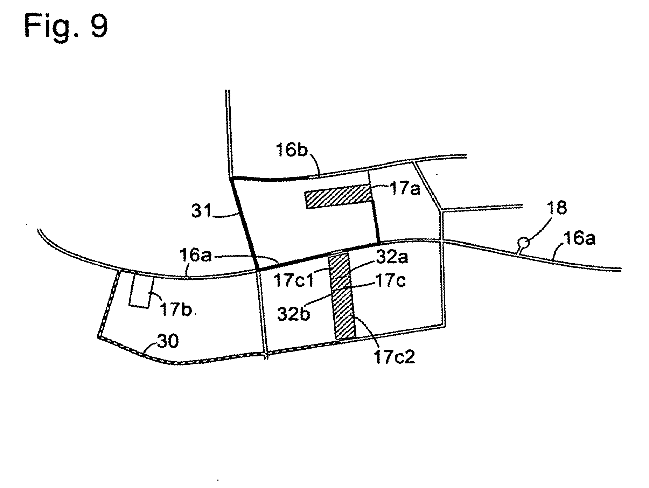

Wie in Fig. 4 gezeigt, wurde der der Mähdrescher 2 zu Beginn des Ernteeinsatzes auf dem gestrichelt dargestellten Weg 19b zur Fläche 17b geschickt. In der Zeit, die der Mähdrescher 1 für die Fläche 17a benötigt hat, hat der Mähdrescher 2 die Fläche 17b abgeerntet. Anhand der Größen der Flächen 17a, 17b und ihrer Entfernungen von der Infrastruktureinrichtung 18 war bereits in dem vor Beginn des Ernteeinsatzes durchgeführten ersten Simulationslauf absehbar, dass beide Mähdrescher 1, 2 gemeinsam die Fläche 17c würden abernten müssen, wobei dem Mähdrescher 1 ein nördlicher Teil 17c1 und dem Mähdrescher 2 ein südlicher Teil 17c2 zugeteilt wurde (siehe Fig. 9). Der Mähdrescher 2 wird daher nach Bearbeitung der Fläche 17b auf dem in Fig. 9 mit 30 bezeichneten Weg zum Südrand der Fläche 17c dirigiert. Dieser erste Simulationslauf musste mangels Kenntnis der Zufahrten zur Ackerfläche 17a als Weg des Mähdreschers 1 zwischen den Flächen 17a und 17c den in Fig. 9 mit 31 bezeichneten Weg annehmen. Der nach Ergänzung der Datenbank 11 um den Feldweg 26 durchgeführte Simulationslauf führt dazu, dass dieser Feldweg 26 als Weg des Mähdreschers 1 zu der Ackerfläche 17c gewählt wird. Dadurch verkürzt sich die Fahrzeit des Mähdreschers 1 deutlich, und die Simulation trägt dem Rechnung, indem sie die Grenze zwischen den Bereichen 17c1 und 17c2 nach Süden, von einer gestrichelten Linie 32a zu einer durchgezogenen Linie 32b verschiebt. So werden beide Mähdrescher 1, 2 mit der Fläche 17c in etwa gleichzeitig fertig, und die Gesamtdauer des Ernteeinsatzes ist verkürzt.

### Bezugszeichen

- 1.: Mähdrescher
- 2.: Mähdrescher
- 3.: Transportfahrzeug
- 4.: Transportfahrzeug
- 5.: Verarbeitungseinheit
- 6.: Gebäude
- 7.: Funkschnittstelle
- 8.: dezentrale Verarbeitungseinheit
- 9.: CPU
- 10.: Maschinendatenbank
- 11.: geografische Datenbank
- 12.: Simulationsdatenbank
- 13.: Anzeigeschirm
- 14.: Lautsprecher
- 15.: GPS-Decoder
- 16.: Straße
- 17.: Ackerfläche
- 18.: Infrastruktureinrichtung
- 19.: Weg
- 20.: Punkt
- 21.: Feldweg
- 22.: Punkt
- 23.: Ecke
- 24.: Treffpunkt
- 25.: Linie
- 26.: Feldweg
- 27.: befahrene Fläche
- 28.: Überladepunkt
- 29.: Linie
- 30.: Weg
- 31.: Weg
- 32.: Grenze
- 33.: schlecht befahrbare Fläche

## Patentansprüche

1. Verfahren zum Koordinieren mehrerer fahrbarer landwirtschaftlicher Maschinen (1, 2; 3, 4) wenigstens eines ersten und eines zweiten Typs, wobei zur Ausführung einer Aufgabe eine erste Maschine (1, 2) des ersten Typs und eine zweite Maschine (3, 4) des zweiten Typs zeitweilig zusammenarbeiten müssen, mit den Schritten:
a) Simulieren von Arbeitsabläufen für die Maschinen (1, 2; 3, 4) derart, dass bei korrekter Ausführung der simulierten Arbeitsabläufe die erste und die zweite Maschine (1, 3) zu einem festgelegten zukünftigen Zeitpunkt am gleichen Ort zusammentreffen,
b) Überwachen des Arbeitszustands der Maschinen (1, 2; 3, 4);
c) wenn die Überwachung eine Abweichung zwischen dem tatsächlichen Arbeitszustand der ersten Maschine (1) und ihrem gemäß dem simulierten Ablauf erwarteten Arbeitszustand ergibt, erneutes Simulieren der Arbeitsabläufe wenigstens der ersten oder der zweiten Maschine (1, 3) ausgehend von den aktuellen Arbeitszuständen der Maschinen und Signalisieren jedes neu simulierten Arbeitsablaufs an die betroffene. Maschine, **dadurch gekennzeichnet, dass** bei der Neusimulation geprüft wird, ob eine dritte Maschine (4) des zweiten Typs existiert, für die ein Zusammentreffen mit der ersten Maschine (1) leichter realisierbar ist als für die zweite Maschine (3), und dass, wenn diese dritte Maschine (4) existiert, ein Arbeitsablauf für diese dritte Maschine (4) neu simuliert und ihr signalisiert wird, der ein Zusammentreffen mit der ersten Maschine (1) enthält.

2. Verfahren nach Anspruch 1, **dadurch gekennzeichnet, dass** die Neusimulation der Arbeitsabläufe der ersten und der zweiten Maschine unter anderem eine Neufestlegung des Orts und/oder der Zeit des Zusammentreffens (24, 28) beinhaltet.

3. Verfahren nach Anspruch 1 oder 2, **dadurch gekennzeichnet, dass** einer der Maschinentypen eine Arbeitsmaschine (1, 2) zum Bearbeiten einer landwirtschaftlichen Fläche (17) und der andere Maschinentyp (3, 4) eine Transportmaschine für den Materialtransport zwischen der Arbeitsmaschine (1, 2) und einer Infrastruktureinrichtung (18) ist.

4. Verfahren nach Anspruch 3, **dadurch gekennzeichnet, dass** die Arbeitsmaschine eine Erntemaschine (1, 2) ist und die gemeinsam auszuführende Aufgabe das Überladen von Erntegut von der Erntemaschine (1, 2) auf die Transportmaschine (3, 4) ist.

5. Verfahren nach Anspruch 4, **dadurch gekennzeichnet, dass** wenn bei einer Simulation die Erntemaschine (1) sich auf einer abzuerntenden Fläche (17a) befindet und ein Zusammentreffen (28) mit der Transportmaschine (3) an der abzuerntenden Fläche (17a) nicht möglich ist, bevor auf der Fläche (17a) geerntetes Erntegut das Fassungsvermögen eines Tanks der Erntemaschine (1) übersteigt, die Simulation ein Zusammentreffen abseits der abzuerntenden Fläche (17a) oder das Verwerfen eines Restes des noch auf der Fläche (17a) befindlichen Ernteguts vorsieht.

6. Verfahren nach einem der vorhergehenden Ansprüche, **dadurch gekennzeichnet, dass** die Simulation des Arbeitsablaufs für eine der Maschinen (1, 2; 3, 4) die Festlegung eines von der Maschine zurückzulegenden Weges (19a, 19b, 30, 31) umfasst.

7. Verfahren nach Anspruch 6, **dadurch gekennzeichnet, dass** der Weg wenigstens bis zu einem Zusammentreffen (24, 28) mit einer anderen Maschine spezifiziert wird.

8. Verfahren nach Anspruch 6 oder 7, **dadurch gekennzeichnet, dass** bei Festlegung des Weges einer Transportmaschine (3), soweit er über eine landwirtschaftliche Fläche (17a) verläuft, eine Karte der Fläche (17a) genutzt wird, die nicht zu befahrende Teile (27, 33) der Fläche (17a), insbesondere sandige oder feuchte Flächenteile (33) oder stark überfahrene Teile (27) der Fläche (17a) spezifiziert.

9. Verfahren nach einem der Ansprüche 6 bis 8, **dadurch gekennzeichnet, dass** die Festlegung der Wege (19a, 19b, 30, 31) unter Verwendung einer Datenbank (11) erfolgt, die geographisch Information über die Lage der zu bearbeitenden landwirtschaftlichen Fläche (17) und Verkehrswege (16) in der Nachbarschaft der Fläche (17) enthält, und dass der von einer der Maschinen (1, 2; 3, 4) zwischen den in der Datenbank (11) enthaltenen Verkehrswegen (16) und der landwirtschaftlichen Fläche (17) zurückgelegte Weg verfolgt und als ein weiterer Verkehrsweg (21; 26) in der Datenbank (11) verzeichnet, wird.

10. Verfahren nach einem der Ansprüche 6 bis 9, **gekennzeichnet durch** den Schritt des Anzeigens des für eine Maschine (1, 2; 3, 4) festgelegten Weges (19a, 19b, 30, 31) an Bord der Maschine (1, 2; 3, 4) in Kartenform oder in Form aufeinanderfolgender Lenkanweisungen.

11. Verfahren nach einem der vorhergehenden Ansprüche, **dadurch gekennzeichnet, dass** die Simulationen der Arbeitsabläufe aller Maschinen (1, 2; 3, 4) auf Grundlage eines Verzeichnisses der einsatzbereiten Maschinen (10) erfolgt, dass jede Maschine (1, 2; 3, 4) jede Änderung ihrer Einsatzbereitschaft an das Verzeichnis (10) meldet und dass mit Eingang einer Änderungsmeldung wenigstens ein Teil der Arbeitsabläufe unter Berücksichtigung der Änderung neu simuliert wird.

12. Verfahren nach Anspruch 11, **dadurch gekennzeichnet, dass** eine Maschine zusammen mit einer Änderung ihrer Einsatzbereitschaft einen voraussichtlichen Zeitpunkt der Rückänderung ihrer Einsatzbereitschaft an das Verzeichnis meldet, und dass die durch die Änderungsmeldung veranlasste erneute Simulation unter der Annahme erfolgt, dass die Einsatzbereitschaft der Maschine sich zu dem voraussichtlichen Zeitpunkt wieder ändert.

13. Steuervorrichtung (5) mit einer Verarbeitungseinheit (9) und einer Schnittstelle (7) für die Kommunikation mit einer Mehrzahl von fahrbaren landwirtschaftlicher Maschinen (1, 2; 3, 4), **dadurch gekennzeichnet, dass** die Steuervorrichtung (5) eingerichtet ist, ein Verfahren nach einem der Ansprüche 1 bis 12 auszuführen.

14. Computerprogrammprodukt mit ProgrammcodeMitteln, welche eine programmierbare Datenverarbeitungseinrichtung (9) befähigen, das Verfahren nach einem der Ansprüche 1 bis 12 auszuführen.

## Claims

1. Method of co-ordinating a plurality of mobile agricultural machines (1, 2; 3, 4) of at least one first and one second type, a first machine (1, 2) of the first type and a second machine (3, 4) of the second type having to work together for a time to perform a task, having the following steps:
a) simulation of sequences of operations for the machines (1, 2; 3, 4) such that, if the simulated sequences of operations are correctly performed, the first and second machines (1, 3) will rendezvous at the same place at a specified point in time in the future,
b) monitoring of the operating statuses of the machines (1, 2; 3, 4),
c) if the monitoring reveals a difference between the actual operating status of the first machine (1) and its expected operating status in the simulated sequence, re-simulation of the sequences of operations of at least the first or the second machine (1, 3) on the basis of the current operating statuses of the machines, and signalling of any re-simulated sequence of operations to the machine concerned, **characterised in that** it is checked in the course of the re-simulation whether there exists a third machine (4), of the second type, for which a rendezvous with the first machine (1) would be easier to achieve than it would for the second machine (3), and that, if said third machine (4) exists, a sequence of operations which includes a rendezvous with the first machine (1) is re-simulated for this third machine (4) and is signalled to it.

2. Method according to claim 1, **characterised in that** the re-simulation of the sequences of operations of the first and the second machines includes amongst other things a re-specifying of the place and/or time of the rendezvous (24, 28).

3. Method according to claim 1 or 2, **characterised in that** one of the types of machine is a working machine (1, 2) for doing work on an area of agricultural land (17) and the other type of machine (3, 4) is a transporting machine for transporting material between the working machine (1, 2) and an infrastructural facility (18).

4. Method according to claim 3, **characterised in that** the working machine is a harvester (1, 2) and the task to be performed together is the transfer of harvested crop from the harvester (1, 2) to the transporting machine (3, 4).

5. Method according to claim 4, **characterised in that** if, in a simulation, the harvester (1) is situated on an area (17a) to be harvested and a rendezvous (28) with the transporting machine (3) is not possible on the area (17a) to be harvested before crop for harvesting which is being harvested on the area (17a) exceeds the capacity of a tank of the harvester (1), the simulation makes provision for a rendezvous away from the area (17a) to be harvested or for the discarding of a residual amount of the crop for harvesting still situated on the area (17a).

6. Method according to one of the preceding claims, **characterised in that** the simulation of the sequence of operations for one of the machines (1, 2; 3, 4) comprises the specifying of a path (19a, 19b, 30, 31) to be covered by the machine.

7. Method according to claim 6, **characterised in that** the path is specified at least up to a rendezvous (24, 28) with another machine.

8. Method according to claim 6 or 7, **characterised in that** in the specified of the path of a transporting machine (3), in so far as it extends over an area of agricultural land (17a), there is used a map of the area (17a) which specifies parts (27, 33) of the area (17a) which are not to be travelled over, and in particular sandy or wet parts (33) of the area, or parts (27) of the area over which there has been a great deal of travel.

9. Method according to one of claims 6 to 8, **characterised in that** the specifying of the distances (19a, 19b, 30, 31) is performed using a database (11) which contains geographical information on the position of the area of agricultural land (17) on which work is to be done and on routes for travel (16) in the neighbourhood of the area (17), and **in that** the path covered by one of the machines (1, 2; 3, 4) between the traffic routes (16) contained in the database (11) and the area of agricultural land (17) is tracked and is recorded in the database (11) as a further route for travel (21; 26).

10. Method according to one of claims 6 to 9, **characterised by** the step of displaying the path (19a, 19b, 30, 31) specified for a machine (1, 2; 3, 4) on board the machine in map form or in the form of successive steering instructions.

11. Method according to one of the preceding claims, **characterised in that** the simulations of the sequences of operations of all the machines (1, 2; 3, 4) are performed on the basis of a list (10) of the machines ready for use, **in that** each machine (1, 2; 3, 4) reports any change in its readiness for use to the list (10), and **in that**, on receipt of a change report, at least part of the sequences of operations is re-simulated in the light of the change.

12. Method according to claim 11, **characterised in that**, together with a change in its readiness for use, a machine reports to the list the prospective time of a change-back of its readiness for use, and **in that** the re-simulation prompted by the change report is performed on the assumption that the readiness for use of the machine will change again at the prospective time.

13. Control arrangement (5) having a processing unit (9) and an interface (7) for communicating with a plurality of mobile agricultural machines (1, 2; 3, 4), **characterised in that** the control arrangement (5) is designed to carry out a method according to one of claims 1 to 12.

14. Computer software product having program code means which enable a programmable data processing means (9) to carry out the method according to one of claims 1 to 12.

## Revendications

1. Procédé de coordination d'une pluralité d'engins agricoles mobiles (1, 2; 3, 4) d'au moins un premier et un second type, un premier engin (1, 2) du premier type et un second engin (3, 4) du second type devant fonctionner ensemble pendant un certain temps pour réaliser une tâche, comportant les étapes suivantes:
a) simulation de séquences d'opérations pour les engins (1, 2; 3, 4) de telle façon que, en cas de réalisation correcte des séquences d'opérations simulées, les premier et second engins (1, 3) se retrouveront au même endroit à un moment spécifié à l'avenir,
b) suivi des états opérationnels des engins (1, 2; 3, 4),
c) si le suivi révèle une différence entre l'état opérationnel réel du premier engin (1) et son état opérationnel prévu dans la séquence simulée, la re-simulation des séquences d'opérations au moins du premier ou du second engin (1, 3) sur la base des états opérationnels actuels des engins, et la signalisation de toute séquence d'opérations re-simulée à l'engin concerné, **caractérisé en ce qu'**il est vérifié au cours de la re-simulation s'il existe un troisième engin (4), du second type, pour lequel un rendez-vous avec le premier engin (1) serait plus facile à obtenir qu'il le serait pour le second engin (3), et **en ce que**, si ce troisième engin (4) existe, une séquence d'opérations qui comporte un rendez-vous avec le premier engin (1) est re-simulée pour ce troisième engin (4) et lui est signalé.

2. Procédé selon la revendication 1, **caractérisé en ce que** la re-simulation des séquences d'opérations des premier et second engins comporte entre autres choses une re-spécification de l'endroit et/ou du moment du rendez-vous (24, 28).

3. Procédé selon la revendication 1 ou 2, **caractérisé en ce que** l'un des types d'engin est un engin de travail (1, 2) pour faire du travail sur une surface agricole (17) et l'autre type d'engin (3, 4) est un engin de transport pour transporter du matériau entre l'engin de travail (1, 2) et une installation d'infrastructure (18).

4. Procédé selon la revendication 3, **caractérisé en ce que** l'engin de travail est une moissonneuse (1, 2) et la tâche à réaliser ensemble est le transfert de la récolte moissonnée de la moissonneuse (1, 2) à l'engin de transport (3, 4).

5. Procédé selon la revendication 4, **caractérisé en ce que** si, lors d'une simulation, la moissonneuse (1) est située sur une surface (17a) à moissonner et un rendez-vous (28) avec l'engin de transport (3) n'est pas possible sur la surface (17a) à moissonner avant que la récolte à moissonner qui est moissonnée sur la surface (17a) ne dépasse la capacité d'un réservoir de la moissonneuse (1), la simulation prévoit un rendez-vous à distance de la surface (17a) à moissonner ou la mise au rebut d'une quantité résiduelle de la récolte à moissonner encore située sur la surface (17a).

6. Procédé selon l'une des revendications précédentes, **caractérisé en ce que** la simulation de la séquence d'opérations pour l'un des engins (1, 2; 3, 4) comprend la spécification d'un chemin (19a, 19b, 30, 31) à parcourir par l'engin.

7. Procédé selon la revendication 6, **caractérisé en ce que** le chemin est spécifié au moins jusqu'à un rendez-vous (24, 28) avec un autre engin.

8. Procédé selon la revendication 6 ou 7, **caractérisé en ce que**, dans la spécification du chemin, le chemin parcouru d'un engin de transport (3), dans la mesure que celui-ci, s'étend sur une surface agricole (17a), il est utilisé une carte de la surface (17a) qui spécifie des parties (27, 33) de la surface (17a) sur lesquelles il ne faut pas passer et, en particulier, des parties sableuses ou humides (33) de la surface, ou des parties (27) de la surface sur lesquelles il y a eu beaucoup de passage.

9. Procédé selon l'une des revendications 6 à 8, **caractérisé en ce que** la spécification des distances (19a, 19b, 30, 31) est réalisée en utilisant une base de données (11) qui contient des informations géographiques sur la position de la surface agricole (17) sur laquelle du travail va être fait et des voies (16) dans le voisinage de la surface (17), et **en ce que** le chemin parcouru par un des engins (1, 2; 3, 4) entre les voies (16) contenues dans la base de données (11) et la surface agricole (17) est suivie et est enregistrée dans la base de données (11) en tant que voie supplémentaire (21; 26).

10. Procédé selon l'une des revendications 6 à 9, **caractérisé par** l'étape consistant à afficher le chemin (19a, 19b, 30, 31) spécifié pour un engin (1, 2; 3, 4) à bord de l'engin sous forme de carte ou sous la forme d'instructions de direction successives.

11. Procédé selon l'une des revendications précédentes, **caractérisé en ce que** les simulations des séquences d'opérations de tous les engins (1, 2; 3, 4) sont réalisées sur la base d'une liste (10) des engins disponibles pour utilisation, **en ce que** chaque engin (1, 2; 3, 4) signale tout changement au niveau de la disponibilité pour utilisation à la liste (10) et, **en ce que**, à la réception d'une signalisation de changement, au moins une part des séquences d'opérations est re-simulée à la lumière du changement.

12. Procédé selon la revendication 11, **caractérisé en ce que**, ainsi qu'un changement au niveau de sa disponibilité pour utilisation, un engin signale à la liste le moment prévu d'un retour à sa disponibilité pour utilisation, et **en ce que** la re-simulation incitée par la signalisation de changement est réalisée en supposant que la disponibilité pour utilisation de l'engin rechangera au moment prévu.

13. Arrangement de contrôle (5) ayant une unité de traitement (9) et une interface (7) pour communiquer avec une pluralité d'engins agricoles mobiles (1, 2; 3, 4), **caractérisé en ce que** l'arrangement de contrôle (5) est conçu pour effectuer un procédé selon l'une des revendications 1 à 12.

14. Produit logiciel informatique ayant des moyens de code programme qui permettent à un moyen de traitement de données programmable (9) d'effectuer le procédé selon l'une des revendications 1 à 12.
